# EUROPÄISCHE PATENTANMELDUNG

(11) **EP 2 093 640 A1**
(43) Veröffentlichungstag der Anmeldung: **26.08.2009**
(21) Anmeldenummer: 08003211.3
(22) Anmeldetag: 21.02.2008
(51) Int. Cl.: G05B 19/05

(54) **Automatisierungsgerät**

(71) Anmelder: SIEMENS AKTIENGESELLSCHAFT, 80333 München (DE)
(72) Erfinder: Brandmähl-Estor, Gerd, 91334 Hemhofen (DE); Herla, Werner, 91315 Höchstadt (DE); Hofmann, Klaus-Peter, 91086 Aurachtal-Münchaurach (DE); Winter, Robert, 92355 Velburg (DE)

(57) **Zusammenfassung**

Bei einem erfindungsgemäßen Automatisierungsgerät (1) umfasst das Basic Input Output System (13) des Automatisierungsgeräts (1) hardwareabhängige Softwaremodule (20, 20'), insbesondere Treibersoftware, die im Stand der Technik der Firmware (9) des Automatisierungsgeräts (1) zugeordnet sind. Durch diese erfindungsgemäße Verlagerung der hardwareabhängigen Softwaremodule (20, 20') in das Basic Input Output System (13) wird die Firmware (9) hardwareunabhängig und insbesondere abwärtskompatibel. Eine Anpassung der Firmware auf sich verändernde Hardwarekomponenten (3, 3', 5, 5', 7, 7', 15, 15') kann somit zumindest teilweise entfallen.

## Beschreibung

Die Erfindung betrifft ein Automatisierungsgerät, insbesondere eine speicherprogrammierbare Steuerung, umfassend Hardwarekomponenten wie beispielsweise eine CPU, einen Speicher und eine Ein- und/oder Ausgabebaugruppe.

Für ein Automatisierungsgerät stehen in der Regel verschiedene Versionen mit unterschiedlichen Hardware-Ausprägungen zur Verfügung. Dies kann zum einen durch eine Typenvielfalt, aber auch durch eine Veränderung der Konfiguration, z.B. infolge von Versions-Upgrades, im Laufe der Zeit bedingt sein. Zum Betrieb des Automatisierungsgeräts umfasst dieses üblicherweise eine so genannte Firmware als Betriebssystem oder zumindest als Teil des Betriebssystems. Mit Hilfe dieser Firmware werden zumindest elementare Funktionen zur Steuerung und Ein- und Ausgaberoutinen des Automatisierungsgeräts realisiert vergleichbar mit dem Betriebssystem eines bekannten Büro-PCs.

Steht nun für ein Automatisierungsgerät eine Anzahl an verschiedenen Hardwareausprägungen zur Verfügung, weil beispielsweise eine Vielzahl an verschiedenen Hardwarekomponenten an das Automatisierungsgerät angebunden werden können oder sollen, so ist in sehr vielen Fällen eine Anpassung der Firmware an die unterschiedlichen Hardwarekomponenten notwendig. Das heißt, die Firmware muss kompatibel zur jeweils verwendeten Hardware gemacht werden, und hierfür ist üblicherweise ein sehr großer Aufwand notwendig. In einigen Fällen ist dies überhaupt nicht möglich.

Es kommt beispielsweise nicht selten vor, dass ein Automatisierungsgerät eines Steuerungssystems defekt ist und ausgetauscht werden muss. Zum Zeitpunkt des Defekts ist beispielsweise nur noch eine neuere Hardware-Version dieses Automatisierungsgeräts verfügbar. Damit sich dieses neuere Automatisierungsgerät in die vorhandene Automatisierungsarchitektur nahtlos einfügt, muss auf dieser neueren Version des Automatisierungsgeräts die Firmware des auszutauschenden älteren Automatisierungsgeräts weiterhin unmodifiziert ablauffähig sein. In der Regel ist dies überhaupt nicht möglich oder nur mit sehr hohem Aufwand realisierbar.

Bisherige Ansätze, diesem Problem zu begegnen, stützen sich zum einen auf die Firmware selbst, wobei eine neuere Version der Firmware so eingerichtet wird, dass sie auch alle alten Hardware-Ausprägungen bedienen kann. Dies bedeutet jedoch einen hohen Resourcenverbrauch, eine sehr hohe Komplexität dieser Firmware und somit auch eine hohe Fehleranfälligkeit.

Ein anderer Ansatz umfasst den Versuch, die Hardware und die Schnittstelle zur Hardware (das Basic-Input-Output-System) speziell an die jeweils vorhandene Firmware-Version anzupassen. Das bedeutet, dass hierbei die Firmware belassen und die Schnittstelle zur Hardware angepasst wird. Hierzu ist dann der komplette Austausch von Software, beispielsweise des Basic Input Output Systems nötig, die mit der neuen Hardware ausgeliefert wurde. Jedoch kann eine Version dieser hardwarespezifischen Software in der Regel nur eine Version der Firmware bedienen.

Ein weiterer Ansatzpunkt zur Begegnung des genannten Problems besteht in einer Lagerhaltung von alten Hardware-Versionen. Dies bedeutet, dass selbst nach Freigabe und Einsatz von neueren Hardware-Versionen weiterhin veraltete Baugruppen auf Lager gehalten werden müssen. Da diese alten Baugruppen zusätzlich zu den mittlerweile erhältlichen neueren Baugruppen produziert und eingelagert werden müssen, erzeugt dies einen nicht unerheblichen Aufwand. Im Übrigen ist eine Abschätzung, wie viele dieser älteren Baugruppen zukünftig benötigt werden, oftmals sehr schwierig.

Aufgabe der Erfindung ist es, die Flexibilität eines Automatisierungsgeräts, insbesondere im Hinblick auf Kompatibilität mit unterschiedlichen Hardwareausprägungen mit möglichst geringem Aufwand zu verbessern.

Die Aufgabe wird erfindungsgemäß gelöst durch ein Automatisierungsgerät mit Hardwarekomponenten umfassend zumindest eine CPU, einen Speicher und eine Ein- und/oder Ausgabebaugruppe, mit einer Firmware als zumindest ein Teil des Betriebssystems des Automatisierungsgeräts und umfassend zumindest elementare Funktionen zur Steuerung und Ein- und Ausgaberoutinen des Automatisierungsgeräts, wobei die Firmware hardwareabhängige und hardwareunabhängige Software-Module umfasst, und mit einem Basic Input Output System (BIOS) realisiert in Software, das nach dem Einschalten des Automatisierungsgeräts zur Ausführung kommt, und welches das Automatisierungsgerät in einen Grundzustand versetzt und anschließend das Laden der Firmware veranlasst, wobei das Basic Input Output System den Hardwarekomponenten zugeordnet ist und wobei zumindest eines, bevorzugt alle, der hardwareabhängigen Softwaremodule der Firmware in das Basic Input Output System verlagert sind.

Die Erfindung geht dabei von der Überlegung aus, dass die Firmware eines Automatisierungsgeräts dann besonders flexibel und portabel ist, wenn sie möglichst wenige, bevorzugt keine, hardwareabhängigen Softwaremodule mehr enthält.

Üblicherweise umfasst eine Firmware, vergleichbar mit einem PC-Betriebssystemen, sowohl hardwareabhängige, als auch hardwareunabhängige Softwarekomponenten. Wenn nun beispielsweise eine Hardwarekomponente getauscht wird, so ist das betreffende hardwareabhängige Softwaremodul der Firmware nicht mehr aktuell und die Firmware kann diese Hardwarekomponente nicht mehr bedienen. Bei der vorliegenden Erfindung jedoch umfasst die Firmware nicht mehr alle hardwareabhängigen Softwaremodule der Firmware, bevorzugt keine mehr, so dass bei Veränderung von Hardwarekomponenten deren korrespondierendes hardwareabhängiges Softwaremodul nicht mehr in der Firmware vorhanden ist, die Firmware also nicht modifiziert werden muss.

Die genannte Verlagerung von hardwareabhängigen Softwaremodulen aus der Firmware in das Basic Input Output System führt zu einer hohen Flexibilität und Portabilität der Firmware des Automatisierungsgeräts. Das Basic Input Output System ist eine sehr hardware-nahe Software. Bei der vorliegenden Erfindung werden nun hardwareabhängige (Betriebs-)Systemfunktionen nicht mehr in der Firmware vorgehalten, sondern in das BIOS integriert. Wenn nun die Hardwarekomponente ausgetauscht wird, so bringt sie ein entsprechend aktualisiertes BIOS mit, und die Firmware muss nicht angepasst werden.

Die Schnittstelle zur Firmware kann für verschiedene Hardware-Versionen oder Hardware-Konfigurationen standardisiert werden, so dass ein einfacher Zugriff auf die hardwareabhängigen Softwaremodule des BIOS der jeweiligen Hardware durch die Firmware ermöglicht ist, ohne dass die Firmware rekonfiguriert werden muss.

Somit realisiert dieses Interface die Verbindung mindestens der Hardwarekomponenten mit der Firmware.

Bevorzugt ist das Interface weiterhin eingerichtet, weitere Hardwarekomponenten mittels weiterer hardwareabhängiger Softwaremodule des BIOS mit der Firmware zu verbinden, so dass mittels des Interfaces eine virtuelle Maschine für die Firmware realisiert ist.

Die Firmware bleibt hierbei hardwareunabhängig, und das Interface sorgt dafür, dass die Firmware neben den bereits genannten Hardwarekomponenten auch weitere Hardwarekomponenten bedienen kann. Dadurch ist eine einfache Portabilität der Firmware ermöglicht.

In einer weiteren Ausführungsform umfasst das Basic Input Output System (BIOS) ein Extensible Firmware Interface (EFI).

Das Extensible Firmware Interface ist eine Spezifikation für BIOS-Software, die es erlaubt, sehr einfach und komfortabel hardwareabhängige Softwaremodule in ein BIOS einzubringen und über ein Interface den Zugriff zu ermöglichen.

Das Interface ist bevorzugt ein so genannter Hardware Abstraction Layer.

Dieser Hardware Abstraction Layer ist bevorzugt dem Basic Input Output System zugeordnet.

In einer weiteren Ausführungsform umfassen die hardwareabhängigen Softwaremodule, welche in das BIOS ausgelagert sind, Treibersoftware zur Anbindung der Hardwarekomponente an die Firmware.

Bei dieser Ausführungsform bringt jede Hardwarekomponente ihre eigenen hardwareabhängigen Treiber mit und die Firmware ist ohne spezielle Anpassungen an die Hardware auf den verschiedenen Ausprägungen der Hardwarekomponente ablauffähig.

Im Folgenden werden zwei Ausführungsformen der Erfindung näher erläutert. Es zeigen:
- FIG 1: ein Automatisierungsgerät nach dem Stand der Technik,
- FIG 2: ein erstes Ausführungsbeispiel für ein erfindungsgemäßes Automatisierungsgerät, und
- FIG 3: eine weitere Ausführungsform für ein erfindungsgemäßes Automatisierungsgerät.

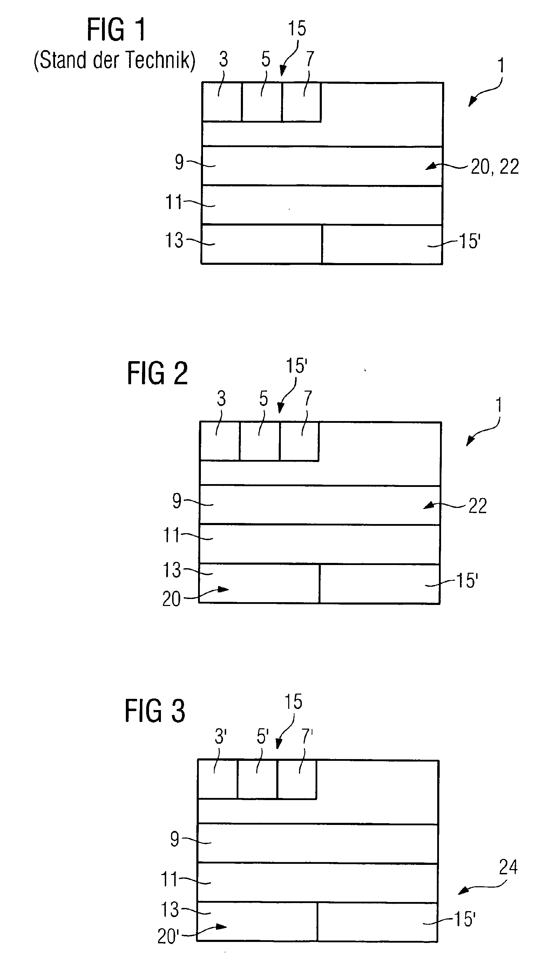

In Figur 1 ist ein Automatisierungsgerät 1 dargestellt, welches eine CPU 3, einen Speicher 5 und eine Ein/Ausgabegruppe 7 umfasst. Als Betriebssystem ist eine Firmware 9 installiert, welche sowohl hardwareabhängige 20, als auch hardwareunabhängige Softwaremodule 22 umfasst. Die Firmware 9 ist also u.a. auch dafür zuständig, zumindest Teile der Funktionen der Hardwarekomponenten 3, 5, 7 zu realisieren mittels der hardwareabhängigen Softwaremodule 20.

Das Automatisierungsgerät 1 umfasst weiterhin ein BIOS oder/und EFI, um nach seinem Start in einen definierten Grundzustand versetzt zu werden und um das in der Firmware 9 implementierte Betriebssystem zu laden.

Neben den Hardwarekomponenten CPU 3, Speicher 5 und Ein/Ausgabegruppe 7 können selbstverständlich weitere, hier nicht näher definierte Hardwarekomponenten 15' vorhanden sein, welche ebenfalls zumindest in Teilen ihrer Funktionen durch die hardwareabhängigen Softwaremodule 20 der Firmware bedient werden.

Wenn nun bei diesem Automatisierungsgerät nach dem Stand der Technik Hardwarekomponenten 3, 5, 7, 15 verändert werden, beispielsweise durch upgrade zu einer neueren Version, so muss auch die Firmware 9 angepasst werden, da die hardwareabhängigen Softwaremodule 20 bei einem Upgrade von Hardware-Versionen nicht mehr funktionieren würden.

Ein Hardware Abstraction Layer 11 dient als Schnittstelle zwischen der Hardware 3, 5, 7, 15 und der Firmware 9 des Automatisierungsgeräts.

Beim erfindungsgemäßen Automatisierungsgerät 1 dargestellt in Figur 2 sind die hardwareabhängigen Softwaremodule 20 der Firmware 9 ausgelagert ins BIOS 13. Wenn nun bei einem erfindungsgemäßen Automatisierungsgerät 1 beispielsweise ein Hardware-Upgrade stattfindet, so muss die Firmware 9 nicht angepasst werden, da die hardwareabhängigen Softwaremodule 20, welche beispielsweise ausgeprägt als Treibersoftware über das Interface 11 mit der Firmware 9 kommunizieren, von der Hardware selbst im BIOS "mitgebracht" werden.

In einer weiteren Ausführungsform der Figur 3 ist eine weitere Hardwareausprägung in Form von CPU 3', Speicher 5' und Ein-/Ausgabebaugruppe 7' vorgesehen sowie gegebenenfalls weitere Hardwarekomponenten 15'.

Bei dieser anderen hardwaremäßigen Ausprägung sind die entsprechenden hardwareabhängigen Softwaremodule 20' wieder im BIOS implementiert, und nicht in der Firmware 9.

So kann die Firmware 9 sowohl im Ausführungsbeispiel der Figur 2 als auch im vorliegenden Ausführungsbeispiel der Figur 3 unverändert eingesetzt werden, obwohl unterschiedliche Hardwareausprägungen der Hardwarekomponenten vorliegen. Durch eine Standardisierung des Interfaces 11 kann dann die Firmware 9 mit einer großen Vielzahl an unterschiedlichen Hardwareausprägungen der Hardwarekomponenten betrieben werden.

Zusammengefasst schafft ein erfindungsgemäßes Automatisierungsgerät ohne großen Aufwand eine Abwärts-Kompatibilität, d.h., auf einer neueren Version einer Hardwarekomponente ist eine ältere Firmware weiterhin ablauffähig. Aber auch eine Aufwärts-Kompatibilität ist erreichbar, ohne dass eine neuere Firmware alle älteren Hardwareausprägungen der Hardwarekomponenten bedienen können muss. Dies bedeutet wiederum weniger Ressourcenverbrauch, weniger Komplexität und weniger Fehleranfälligkeit der Firmware.

Ein weiterer Vorteil besteht auch im nunmehr vorgeschlagenen modularen Aufbau durch die Verteilung der hardwareabhängigen Softwaremodule 20, 20' und hardwareunabhängigen Softwaremodule 22. Dadurch kann beispielsweise die Entwicklung einer neuen Hardwarekomponente und die Entwicklung einer neuen Softwarekomponente für die Firmware getrennt voneinander durchgeführt werden. Somit kann hard- und softwaremäßig unabhängig voneinander entwickelt und getestet werden.

Weiterhin ist es auch nicht mehr erforderlich, eine Lagerhaltung von mittlerweile veralteten Hardwarekomponenten vorzunehmen, um eine Kompatibilität aufrecht zu erhalten.

Im Stand der Technik ist es so, dass das Interface zwischen Firmware und Hardware ein Hardware-Interface ist und zugleich Teil der Firmware. Der Inhalt dieses Interfaces wird maßgeblich über einen vorhandenen Hardwareausbau bestimmt. Der Hardwareausbau ist von einer Version zur nächsten durch kurze Innovationszyklen meist inkompatibel, was wiederum zu einer inkompatiblen Änderung des Hardware-Interfaces führt. Mit der vorliegenden Erfindung wandert das beschriebene Hardware-Interface in das der Hardware zugeordnete BIOS, und die Schnittstelle zur Hardware wird zu einem Software-Interface. Dieses Software-Interface kann dann losgelöst vom realen Hardwareaufbau definiert, entwickelt und standardisiert werden.

Das BIOS eines erfindungsgemäßen Automatisierungsgeräts umfasst hardwareabhängige Softwaremodule, insbesondere Treibersoftware, die im Stand der Technik der Firmware des Automatisierungsgeräts zugeordnet sind. Durch diese erfindungsgemäße Verlagerung der hardwareabhängigen Softwaremodule in das BIOS wird die Firmware hardwareunabhängig und insbesondere abwärtskompatibel. Eine Anpassung der Firmware auf sich verändernde Hardwarekomponenten kann somit zumindest teilweise entfallen.

## Patentansprüche

1. Automatisierungsgerät (1), umfassend:
• Hardwarekomponenten (3, 5, 7) umfassend zumindest eine CPU (3), einen Speicher (5) und eine Ein- oder/und Ausgabebaugruppe (7),
• eine Firmware (9) als zumindest ein Teil eines Betriebssystems des Automatisierungsgeräts (1) und umfassend zumindest elementare Funktionen zur Steuerung und Ein- und Ausgaberoutinen des Automatisierungsgeräts (1), wobei die Firmware (9) hardwareabhängige (20) und hardwareunabhängige (22) Softwaremodule umfasst, und
• ein Basic Input Output System (13) realisiert in Software, das nach dem Einschalten des Automatisierungsgeräts (1) zur Ausführung kommt und das Automatisierungsgerät (1) in einen Grundzustand versetzt und anschließend das Laden der Firmware (9) veranlasst, wobei das Basic Input Output System (13) den Hardwarekomponenten (3, 5, 7) zugeordnet ist,
**dadurch gekennzeichnet, dass**
zumindest eines, bevorzugt alle, der hardwareabhängigen Softwaremodule (20) der Firmware (9) in das Basic Input Output System (13) verlagert sind.

2. Automatisierungsgerät (1) nach Anspruch 1, wobei das Automatisierungsgerät eine Speicherprogrammierbare Steuerung umfasst.

3. Automatisierungsgerät (1) nach Anspruch 1, wobei das Automatisierungsgerät PC-basiert ist.

4. Automatisierungsgerät (1) nach einem der Ansprüche 1-3, weiterhin umfassend ein Interface (11) zur Verbindung der hardwareabhängigen Softwaremodule (20) des Basic Input Output Systems (13) mit der Firmware (9).

5. Automatisierungsgerät (1) nach Anspruch 4, wobei das Interface (11) die Verbindung mindestens der Hardwarekomponenten (3, 5, 7) mit der Firmware realisiert.

6. Automatisierungsgerät (1) nach Anspruch 4 oder 5, wobei das Interface (11) eingerichtet ist, weitere Hardwarekomponenten (3', 5', 7') mittels weiterer hardwareabhängiger Softwaremodule (20') des Basic Input Output Systems (13) mit der Firmware (9) zu verbinden, so dass mittels des Interfaces (11) eine Virtuelle Maschine (24) für die Firmware (9) realisiert ist.

7. Automatisierungsgerät (1) nach Anspruch 6, wobei das Basic Input Output System (13) ein Extensible Firmware Interface (EFI) umfasst.

8. Automatisierungsgerät (1) nach einem der Ansprüche 4-7, wobei das Interface (11) ein Hardware Abstraction Layer ist.

9. Automatisierungsgerät (1) nach einem der Ansprüche 4-8, wobei das Interface (11) dem Basic Input Output System (13) zugeordnet ist.

10. Automatisierungsgerät (1) nach einem der Ansprüche 1-9, wobei die hardwareabhängigen Softwaremodule (20, 20') Treibersoftware zur Anbindung der Hardwarekomponenten (3, 3', 5, 5', 7, 7') an die Firmware (9) umfassen.
